# EUROPÄISCHE PATENTSCHRIFT

(11) **EP 2 250 385 B1**
(45) Veröffentlichungstag und Bekanntmachung des Hinweises auf die Patenterteilung: **21.08.2013**
(21) Anmeldenummer: 09717651.5
(22) Anmeldetag: 21.02.2009
(51) Int. Cl.: F16C 33/12, F16C 33/14, C23C 22/62

(54) **GLEITLAGERBAUTEIL, GLEITLAGER UND VERFAHREN ZUR OBERFLÄCHENBEHANDLUNG EINES GLEITLAGERBAUTEILS**
PLAIN BEARING COMPONENT, PLAIN BEARING AND METHOD FOR THE SURFACE TREATMENT OF A PLAIN BEARING COMPONENT
COMPOSANT DE PALIER LISSE, PALIER LISSE ET PROCÉDÉ DE TRAITEMENT DE SURFACE D UN COMPOSANT DE PALIER LISSE

(30) Priorität: 05.03.2008 DE 102008012762
(43) Veröffentlichungstag der Anmeldung: 17.11.2010
(73) Patentinhaber: AB SKF, 415 50 Göteborg (SE)
(72) Erfinder: VON SCHLEINITZ, Thilo, 97422 Schweinfurt (DE)
(74) Vertreter: Schonecke, Mitja
(86) Internationale Anmeldenummer: PCT/EP2009/001257
(87) Internationale Veröffentlichungsnummer: WO 2009/109303

(56) Entgegenhaltungen:
- CH-A- 360 565
- DE-A1- 2 210 720
- DE-A1- 2 329 576
- DE-A1- 4 312 417
- JP-A- 2008 039 158
- US-A- 2 077 450

## Beschreibung

Die Erfindung betrifft ein Gleitlagerbauteil mit einer Gleitfläche zur Ausbildung eines Gleitkontakts. Weiterhin betrifft die Erfindung ein Gleitlager und ein Verfahren zur Oberflächenbehandlung von Gleitlagerbauteilen.

Gleitlagerbauteile sind in vielfältigen Ausgestaltungen bekannt. Dabei besteht insbesondere auch hinsichtlich der verwendeten Materialien eine große Bandbreite. Insbesondere ist es bereits bekannt, die Oberfläche von Gleitlagerbauteilen blank zu belassen oder zur Verbesserung der Gleit- und/oder Abriebeigenschaften im Bereich der Oberfläche eine Schicht aus einem geeigneten Material auszubilden. Häufig kommen insbesondere Chromschichten und Phosphatschichten zum Einsatz. Dabei weisen Chromschichten besonders gute Eigenschaften auf. Allerdings ist eine Beschichtung mit Chrom vergleichsweise teuer.

Weiterhin ist es bereits bekannt, Gleitlagerbauteile mit Gleitbelägen zu versehen, die beispielsweise aus Kunststoffmaterialien oder Verbundwerkstoffen gefertigt sein können.

Aus der CH 360 565 A ist ein feinmechanisches Elementenpaar mit einem Element aus gehärtetem Stahl bekannt. Die Oberfläche dieses Elements ist künstlich oxidiert. Aus der DE 23 29 576 A1 sind Verfahren zur Oberflächenverbesserung von Wälzkörpern bzw. -kugeln und/oder Laufbahnen von homokinetischen Gelenken bzw. Wälzlagern oder anderen im gegenseitigen Gleitkontakt stehenden Stahloberflächen bekannt, bei dem eine Brünier-Behandlung durchgeführt wird.

Aus der US 2 077 450 A1 ist ein Verfahren zum Brünieren von Stahloberflächen bekannt.

Eine Aufgabe der Erfindung ist es, mit einem vertretbaren Fertigungsaufwand ein Gleitlagerbauteil bzw. ein Gleitlager so auszubilden, dass es gute Gleiteigenschaften und eine lange Lebensdauer aufweist.

Diese Aufgabe wird durch ein Gleitlagerbauteil mit der Merkmalskombination des Anspruchs 1 bzw. durch ein Gleitlager gemäß Anspruch 6 sowie ein Verfahren gemäß Anspruch 11 gelöst.

Das erfindungsgemäße Gleitlagerbauteil verfügt über eine Gleitfläche zur Ausbildung eines Gleitkontakts, wobei die Gleitfläche ein Rauheitsprofil aufweist. Die Besonderheit des erfindungsgemäßen Gleitlagerbauteils besteht darin, dass die Gleitfläche im Bereich einer Brünierschicht ausgebildet ist, die sich über die gesamte Tiefe des Rauheitsprofils erstreckt.

Die Erfindung hat den Vorteil, dass bei einem partiellen Abtrag des Rauheitsprofils, der während der Betriebsphase des Gleitlagerbauteils durch den Gleitkontakt mit einer Gegenfläche hervorgerufen wird, keine signifikanten Erhebungen vorhanden sind oder stehen bleiben, die aus dem nichtbrünierten und daher härteren Grundmaterial des Gleitlagerbauteils bestehen. Insbesondere bei einem harten Grundmaterial können derartige Erhebungen stark abrasiv wirken und die Gegenfläche schädigen sowie durch Verzahnung den Gleitwiderstand erhöhen. Beim erfindungsgemäßen Gleitlagerbauteil wird die Gleitfläche bis zur vollständigen Einebnung des Rauheitsprofils durch die Brünierschicht gebildet und dadurch die Gegenfläche nur innerhalb vertretbarer Grenzen beansprucht. Dies führt zu einer langen Lebensdauer des Gleitlagerbauteils und der Gegenfläche.

Ein weiterer Vorteil besteht darin, dass das Gleitlagerbauteil auch unter hoher Belastung eine vergleichsweise geringe Reibung aufweist. Dies ermöglicht einen wirtschaftlichen Betrieb, vermeidet eine unzulässig starke Erwärmung und wirkt sich positiv auf die Lebensdauer auf.

Die Brünierschicht weist eine Dicke von wenigstens 0,8 µm auf. Vorzugsweise weist die Brünierschicht eine Dicke von wenigstens 1,0 µm auf. Weiterhin kann die Brünierschicht eine Dicke von maximal 2,0 µm aufweisen. Als Hauptbestandteil kann die Brünierschicht Eisenoxid der Summenformel Fe₃O₄ aufweisen. Dieses Eisenoxid bildet eine sehr dichte und haftfeste Schicht.

Das erfindungsgemäße Gleitlagerbauteil kann aus einem Eisenwerkstoff, insbesondere aus einem niedrig legierten Stahl, gefertigt sein. Besonders geeignet ist ein durchhärtender Stahl, vorzugsweise ein Wälzlagerstahl wie zum Beispiel ein Stahl der Sorte 100Cr6. Derartige Werkstoffe haben den Vorteil, dass sie vergleichsweise kostengünstig verfügbar sind und hohen Belastungen Stand halten.

Die Gleitfläche des erfindungsgemäßen Wälzlagerbauteils kann im Querschnitt zylinderförmig ausgebildet sein. Das erfindungsgemäße Gleitlagerbauteil ist beispielsweise als eine Hülse ausgebildet. Dabei ist die Gleitfläche bevorzugt auf der Außenseite der Hülse angeordnet.

Die Erfindung betrifft weiterhin ein Gleitlager mit einem ersten Gleitlagerbauteil, das eine erste Gleitfläche aufweist und einem zweiten Gleitlagerbauteil, das eine zweite Gleitfläche aufweist. Das erste Gleitlagerbauteil und das zweite Gleitlagerbauteil sind relativ zueinander bewegbar. Die erste Gleitfläche und die zweite Gleitfläche stehen in einem Gleitkontakt zueinander. Die erste Gleitfläche besteht wenigstens bereichsweise aus einem Nichteisenwerkstoff. Das erfindungsgemäße Gleitlager zeichnet sich dadurch aus, dass die zweite Gleitfläche im Bereich einer Brünierschicht ausgebildet ist, welche sich über die gesamte Tiefe des Rauheitsprofils des zweiten bleitfläche erstreckt, die zweite gleitfläche bis zur vollstandigen Einebnung des Rauheitsprofils durch die Brünierschicht gebildet wird.

Eine Gleitpaarung aus einem Nichteisenwerkstoff und aus einer Brünierschicht weist im Hinblick auf die Gleiteigenschaften und die Lebensdauer günstige Eigenschaften auf.

Das erste Gleitlagerbauteil kann aus einem Nichteisenwerkstoff gefertigt sein oder eine Beschichtung oder einen Gleitbelag aus einem Nichteisenwerkstoff aufweisen. Bei dem Nichteisenwerkstoff handelt es sich bevorzugt um einen nicht reinmetallischen Feststoff insbesondere mit selbstschmierenden Eigenschaften. Besonders vorteilhaft ist es, wenn der Nichteisenwerkstoff ein Verbundwerkstoff ist. In diesem Fall kann der Nichteisenwerkstoff beispielsweise als ein Metall-Kunststoff-Verbund oder ein Kunststoff-Faser-Verbund ausgebildet sein. Der Nichteisenwerkstoff kann Poly-Tetra-Fluor-Ethylen (PTFE) aufweisen.

Das erste Gleitlagerbauteil kann als eine Hülse ausgebildet sein. Dabei ist die erste Gleitfläche bevorzugt auf der Innenseite der Hülse angeordnet.

Das zweite Gleitlagerbauteil kann so ausgebildet sein, wie vorstehend für das erfindungsgemäße Gleitlagerbauteil erläutert.

Die Erfindung betrifft weiterhin ein Verfahren zur Oberflächenbehandlung von Gleitlagerbauteilen aus Stahl. Beim erfindungsgemäßen Verfahren wird ein Behandlungsbad durch Auflösen eines Salzes angesetzt, das einen Oxidationsmittel-Gehalt von wenigstens 15 Gew.% aufweist. Im Behandlungsbad wird ein Siedepunkt im Bereich von 142° C bis 148° C eingestellt. Die Gleitlagerbauteile werden in das Behandlungsbad eingetaucht und nach einer Behandlungszeit von wenigstens 20 Minuten aus dem Behandlungsbad entnommen. Die Gleitlagerbauteile werden im Behandlungsbad mit einer Geschwindigkeit von wenigstens 20cm/min bewegt.

Auf diese Weise kann eine sehr dichte und gut haftende Brünierschicht im Bereich der Oberfläche der Gleitlagerbauteile ausgebildet werden.

Das Behandlungsbad wird vorzugsweise mit einem Salz angesetzt, das einen Nitritgehalt von 14 Gew.% bis 17 Gew.% aufweist. Weiterhin weist das verwendete Salz bevorzugt einen Nitratgehalt von 2 Gew.% bis 4 Gew.% auf. Um möglichst stabile Reaktionsbedingungen einzustellen, kann dem Behandlungsbad ein Phosphatpuffer zugesetzt werden.

Die Gleitlagerbauteile können vor dem Eintauchen in das Behandlungsbad auf eine Anwärmtemperatur von wenigstens 80° C angewärmt werden. Dies hat den Vorteil, dass der durch das Einbringen der Gleitlagerbauteile verursachte Temperatureinbruch des Behandlungsbads relativ gering ausfällt.

Vorzugsweise wird das Behandlungsbad für den überwiegenden Teil der Behandlungszeit im Siedepunkt betrieben. Die Gleitlagerbauteile werden im Behandlungsbad mit einer Geschwindigkeit von wenigstens 20 cm/min bewegt. Dadurch wird erreicht, dass die Gleitlagerbauteile fortwährend mit frischem Medium in Kontakt kommen.

Mit dem erfindungsgemäßen Verfahren werden besonders gute Ergebnisse erzielt, wenn die Gleitlagerbauteile nach einer Behandlungszeit von wenigstens 35 Minuten aus dem Behandlungsbad entnommen werden. Der Höchstwert der Behandlungszeit, nach der die Gleitlagerbauteile aus dem Behandlungsbad entnommen werden, kann 60 Minuten, insbesondere 45 Minuten betragen. Unter diesen Bedingungen wird eine vergleichsweise dicke und haftfeste Brünierschicht bei noch immer geringer Auflockerung ausgebildet.

Die Erfindung wird im Folgenden näher erläutert.

Mit dem erfindungsgemäßen Verfahren können Gleitlagerbauteile aus einem niedrig legierten Stahl, insbesondere aus einem Wälzlagerstahl, vor allem aus einem durchhärtenden Wälzlagerstahl, behandelt werden. Beispielsweise können die Gleitlagerbauteile aus einem Stahl mit der Bezeichnung 100Cr6 hergestellt sein. Dieser Stahl enthält, bezogen auf seine Masse, 0,93 bis 1,05 % Kohlenstoff, 1,35 bis 1,60 % Chrom, 0,25 bis 0,45 % Mangan, 0,15 bis 0,35 % Silizium und bis zu 0,1 % Molybdän. Der Phosphorgehalt beträgt maximal 0,025 %, der Schwefelgehalt maximal 0,015 %. Außerdem können herstellungsbedingt noch kleine Mengen an weiteren Elementen enthalten sein.

Unter Gleitlagerbauteilen sind Komponenten von Gleitlagern zu verstehen, die eine Gleitfläche aufweisen, welche beim bestimmungsgemäßen Gebrauch des Gleitlagers einer Gleitbeanspruchung ausgesetzt ist. Eine Gleitbeanspruchung tritt auf, wenn ein Bauteil auf einer Unterlage gleitet, wobei ein berührender Kontakt zwischen der Oberfläche des Bauteils und der Unterlage ausgebildet ist. Gleitlagerbauteile können beispielsweise als Gleitlagerhülsen oder als Komponenten von Kugelgelenken usw. ausgebildet sein.

Die erfindungsgemäß behandelten Gleitlagerbauteile können insbesondere in Kombination mit Gleitpartnern eingesetzt werden, die Gleitflächen aus Nichteisenwerkstoffen aufweisen. Dies bedeutet, dass wenigstens Teilbereiche der Gleitflächen der Gleitpartner aus Nichteisenwerkstoffen bestehen. Die Gleitpartner können vollständig, d. h. nicht nur im Bereich der Gleitflächen, aus Nichteisenwerkstoffen bestehen. Ebenso ist es auch möglich, dass die Gleitpartner lediglich Beschichtungen oder Gleitbeläge aus Nichteisenwerkstoffen aufweisen. Als Nichteisenwerkstoffe kommen insbesondere nicht reinmetallische Werkstoffe in Frage, wobei Verbundwerkstoffe besonders geeignet sind. Die Verbundwerkstoffe können beispielsweise als ein Metall-Kunststoff-Verbund oder ein Kunststoff-Faser-Verbund ausgebildet sein. Als Kunststoff eignet sich beispielsweise Poly-Tetra-Fluor-Ethylen (PTFE), das gute Gleiteigenschaften in Kombination mit einem guten Verschleißverhalten besitzt.

Ein erfindungsgemäß ausgebildetes Gleitlager weist als Gleitpaarung somit zwei unterschiedlich ausgebildete Gleitflächen auf: Die eine Gleitfläche ist gemäß dem erfindungsgemäßen Verfahren behandelt, die andere Gleitfläche besteht wenigstens bereichsweise aus einem Nichteisenwerkstoff.

Vor der Behandlung im Rahmen des erfindungsgemäßen Verfahrens werden die Gleitlagerbauteile in oder nahe ihren Endabmessungen hergestellt, d. h. durch das erfindungsgemäße Verfahren wird die Maßhaltigkeit der Gleitlagerbauteile allenfalls geringfügig beeinflusst. Weiterhin wird vor der Durchführung des erfindungsgemäßen Verfahrens bei den Gleitlagerbauteilen eine gewünschte Oberflächentopographie ausgebildet. Dies kann beispielsweise durch Schleifen oder Honen erfolgen. Wie im Folgenden noch näher erläutert wird, kann die Oberflächentopographie der Gleitlagerbauteile durch das erfindungsgemäße Verfahren verändert werden. Ob und in welchem Ausmaß eine Veränderung der Oberflächentopographie erfolgt, hängt von den Verfahrensparametern ab.

Durch das erfindungsgemäße Verfahren wird im Bereich der Oberfläche der Gleitlagerbauteile eine Brünierschicht ausgebildet. Die Brünierschicht kann vollflächig ausgebildet werden oder sich lediglich über einen Teilbereich der Oberfläche der Gleitlagerbauteile erstrecken. Beispielsweise kann die Brünierschicht auf der Außenseite von hülsenförmig ausgebildeten Gleitlagerteilen ausgebildet werden. Die Brünierschicht weist eine Dicke von wenigstens 0,8 µm auf und kann bis zu 2,0 µm dich werden. Insbesondere werden Brünierschichten mit einer Dicke zwischen 1,0 µm und 2,0 µm ausgebildet. Im Vergleich zu Anwendungen bei Wälzlagerbauteilen ist die im Rahmen der Erfindung bei Gleitlagerbauteilen vorgesehene Brünierschicht relativ dick ausgebildet. Dies liegt zum einen darin begründet dass bei Gleitlagerbauteilen - anders als bei Wälzlagerbauteilen - nicht allzu hohe Anforderungen an die Maßhaltigkeit gestellt werden. Während bei Wälzlagern durch die hohe hertzsche Pressung die zulässige Dicke einer härtereduzierten Schicht auf einen geringen Wert begrenzt ist, kann bei Gleitlagern das gesamte Rauheitsprofil oxidiert werden.

Die Dicke der Brünierschicht ist auf das Rauheitsprofil der Oberfläche der Gleitlagerbauteile abgestimmt. Das Rauheitsprofil setzt sich aus einer Vielzahl von Erhöhungen und Vertiefungen zusammen, durch die in einer Richtung senkrecht zur Oberfläche des Gleitlagerbauteils abhängig von der durchgeführten Oberflächenbehandlung Höhenunterschiede bis zu einigen wenigen Mikrometern oder im Submikrometerbereich ausgebildet werden. Die Brünierschicht erstreckt sich bezogen auf eine Richtung senkrecht zur Oberfläche über das gesamte Rauheitsprofil und umfasst auch den Profilgrund. Auf diese Weise wird sichergestellt, dass auch bei einer teilweisen Abtragung der Erhebungen während der Betriebsphase der Gleitlagerbauteile noch eine durchgehende Brünierschicht auf der Oberfläche erhalten bleibt.

Die Brünierschicht weist Eisenoxid in einer Verbundstruktur mit einer Zusammensetzung gemäß der Summenformel Fe₃O₄ auf. Fe₃O₄ besitzt eine inverse Spinellstruktur, wobei die Sauerstoffionen in kubisch dichtester Packung vorliegen. Eine Elementarzelle weist acht Formeleinheiten Fe₃O₄ auf. Demgemäß sind pro Elementarzelle 56 Atome vorhanden und gemäß der Struktur A8 B 16 032 bzw. Fe(III) [Fe(II) Fe(III)] 04 angeordnet. Fe(III) bedeutet dabei dreiwertiges, Fe(II) zweiwertiges Eisen. In der Elementarzelle sind 32 Positionen mit Sauerstoffionen besetzt. 16 Positionen sind mit Eisenionen in einer tetraedrischen Sauerstoffumgebung und 8 Positionen mit Eisenionen in einer oktaedrischen Sauerstoffumgebung besetzt.

Die Stöchiometrie des Fe₃O₄ ist in der Brünierschicht relativ genau eingehalten, soweit dies zur Erzielung der gewünschten Schichtdicke möglich ist. Zu Abweichungen kann es insbesondere bei der Ausbildung sehr dicker Brünierschichten kommen. Dabei kann die Brünierschicht beispielsweise freies Fe₂O₃ aufweisen. Als freies Fe₂O₃ wird im Folgenden Fe₂O₃ bezeichnet, das kein Bestandteil der Verbundstruktur mit der Summenformel Fe₃O₄ ist. Im freien Fe₂O₃ ist das Eisen stärker oxidiert als im Fe₃O₄. Auch sonstige Stoffe können in geringen Mengen in der Brünierschicht vorhanden sein, wobei der Anteil der Fe₃O₄ -Verbundstruktur an der Brünierschicht wenigstens 90 Gew.% beträgt. Freies FeO kann zwar im Prinzip in geringen Mengen in der Brünierschicht vorhanden sein, ist jedoch nicht stabil und daher allenfalls während der Herstellung der Brünierschicht zu beobachten. Als freies FeO wird im Folgenden FeO bezeichnet, das kein Bestandteil der Verbundstruktur mit der Summenformel Fe₃O₄ ist. Im freien FeO ist das Eisen weniger stark oxidiert als im Fe₃O₄.

Die vorstehenden Angaben beziehen sich auf eine Betrachtung des Fe₃O₄ als ein einheitliches Eisenoxid, bei dem das Eisen teils als Fe²⁺-Ionen, teils als Fe³⁺-Ionen vorliegt.

Mitunter wird Fe₃O₄ auch als ein Mischoxid aus FeO und Fe₂O₃ betrachtet, wobei die Anteile von FeO und Fe₂O₃ durch die Stöchiometrie des Fe₃O₄ vorgegeben sind und demgemäß FeO und Fe₂O₃ gleich häufig vorkommen. Das Gewichtsverhältnis von FeO zu Fe₂O₃ im Fe₃O₄ kann unter Berücksichtigung der Atommassen von Eisen und Sauerstoff ermittelt werden. Im Falle von reinem Fe₃O₄ ist bei dieser Betrachtung über den stöchiometrischen Anteil von Fe₂O₃ am Fe₃O₄ hinaus kein weiteres Fe₂O₃ in der Brünierschicht vorhanden ist. Bezüglich der räumlichen Verteilung der einzelnen Oxide ist davon auszugehen, dass im Grenzbereich zum nicht oxidierten Stahl, d. h. im Bereich der Innenseite der Brünierschicht, überwiegend FeO anzutreffen ist. Auf der Oberfläche, d. h. im Bereich der Außenseite der Brünierschicht, ist überwiegend Fe₂O₃ anzutreffen.

Die Brünierschicht der vorstehend näher definierten Zusammensetzung ist polykristallin oder amorph ausgebildet. Bei einer polykristallinen Ausbildung weist die Brünierschicht eine Vielzahl sehr kleiner Kristallite auf. Insbesondere können die Kristallite so ausgebildet sein, dass Ihre Erstreckung senkrecht zur Oberfläche der Gleitlagerbauteile größer ist als ihre Erstreckung parallel zur Oberfläche der Gleitlagerbauteile. Da die Kristallite nicht gleich groß sind, gilt das Größenverhältnis für die Erstreckungen senkrecht und parallel zur Brünierschicht nicht notwendigerweise für jeden einzelnen Kristallit, sondern lediglich im Mittel. Es ist daher zweckmäßig, für die Ermittlung des Größenverhältnisses keine Einzelwerte, sondern Mittelwerte heranzuziehen. Beispielsweise eignet sich hierfür eine arithmetische Mittelwertbildung.

Infolge ihrer kleinen Abmessungen ist es möglich, dass die Kristallite innerhalb der Brünierschicht nahezu lückenlos aneinandergrenzen, so dass die Brünierschicht sehr dicht ausgebildet ist. Insbesondere kann die Brünierschicht so dicht ausgebildet sein, dass Sie von Flüssigkeiten nicht durchdrungen werden kann und somit eine Flüssigkeit, welche die Brünierschicht benetzt, den unterhalb der Brünierschicht vorhandenen Stahl nicht angreifen kann.

Die mit dem erfindungsgemäßen Verfahren ausgebildete Brünierschicht weist insbesondere im Falle von nicht allzu großen Schichtdicken eine tiefschwarze Farbe auf.

Zur Erzeugung der Brünierschicht im Bereich der Oberfläche der Gleitlagerbauteile werden die Gleitlagerbauteile zunächst entfettet. Dies kann beispielsweise durch Eintauchen in ein alkalisches Entfettungsbad erfolgen. Typischer Weise verweilen die Gleitlagerbauteile für ca. 10 Minuten im Entfettungsbad, wobei die Temperatur des Entfettungsbads zwischen 80°C und 90 °C beträgt. Während der Entfettung werden die Gleitlagerbauteile auf eine Anwärmtemperatur T0 von wenigstens 80 °C erwärmt.

Die angewärmten Gleitlagerbauteile werden in ein Behandlungsbad eingetaucht und verweilen dort für eine Zeitspanne t. Das Behandlungsbad ist eine wässrige Lösung, die als Inhaltsstoffe Hydroxid, Nitrit, Nitrat und mehrere Phosphatpuffer enthält. Insbesondere liegen die Inhaltsstoffe in Form von Natriumverbindungen vor. Die Lösung kann durch Auflösen eines Salzes der Zusammensetzung 14 Gew.% Natriumnitrit, 3 Gew.% Natriumnitrat, 81 Gew.% Natriumhydroxid und 2 Gew.% Phosphatpuffer in demineralisiertem Wasser hergestellt werden.

Das Behandlungsbad wird im Siedepunkt betrieben und weist eine Temperatur T auf, die zwischen 142 °C und 148 °C beträgt. Durch die vergleichsweise hohe Temperatur T des Behandlungsbads kann rasch eine dicke Brünierschicht hergestellt werden. Da der Siedepunkt einer wässrigen Lösung konzentrationsabhängig ist, wird über eine Variation der Konzentration des Behandlungsbads der jeweils gewünschte Siedepunkt eingestellt.

Unmittelbar nach dem Eintauchen der Gleitlagerbauteile kann die Temperatur T des Behandlungsbads vorübergehend unter die vorstehend genannten Werte absinken, da die Gleitlagerbauteile vor dem Eintauchen in das Behandlungsbad die Anwärmtemperatur T0 aufweisen, die in der Regel niedriger ist als die Temperatur T des Behandlungsbads. Durch eine Beheizung des Behandlungsbads wird jedoch erreicht, dass der Temperatureinbruch im Behandlungsbad nur von kurzer Dauer ist und für den überwiegenden Teil der Zeitspanne t das vorstehend genannte Intervall für die Temperatur T eingehalten wird. Abhängig von den Möglichkeiten der Beheizung kann auch die Chargengröße und damit die Gesamtmasse der eingetauchten Gleitlagerbauteile angepasst werden. Die Zeitspanne t beträgt zwischen 20 Minuten und 60 Minuten, vorzugsweise zwischen 35 Minuten und 45 Minuten.

Im Behandlungsbad strömt das Badmedium über die Oberfläche der Gleitlagerbauteile. Dies wird dadurch erreicht, dass die Gleitlagerbauteile im Behandlungsbad mit einer Geschwindigkeit von wenigstens 20 cm/min bewegt werden.

Im Behandlungsbad erfolgt ein "Primärangriff" der Oberfläche der Gleitlagerbauteile durch Nitrit und Nitrat. Dabei werden in kurzer Zeit extrem viele Kristallisationskeime ausgebildet. Weiterhin erfolgt im Behandlungsbad ein Schichtwachstum ausgehend von den Kristallisationskeimen.

Da die Bildung von Kristallisationskeimen durch eine hohe Oxidationsmittelkonzentration begünstigt wird, empfiehlt sich für das Behandlungsbad eine hohe Oxidationsmittelkonzentration. Allerdings sinkt mit steigender Oxidationsmittelkonzentration zwangsweise die Hydroxidkonzentration, so dass das Behandlungsbad immer milder wird und schließlich die Oberfläche nicht mehr ausreichend angreift. Um eine hohe Kristallisationskeimdichte zu erzeugen ist somit ein möglichst optimaler Kompromiss zwischen einer hohen Oxidationsmittelkonzentration und einer hohen Hydroxidkonzentration erforderlich.

Unmittelbar nach Ablauf der Zeitspanne t werden die Gleitlagerbauteile aus dem Behandlungsbad entnommen und kalt gespült, um die Reaktion zu stoppen. Dann werden die Gleitlagerbauteile heiß gespült, beispielsweise bei einer Temperatur von wenigstens 80 °C. Als Spülmedium kann jeweils demineralisiertes Wasser verwendet werden. Nach dem Spülen weist die Oberfläche der Gleitlagerbauteile eine tiefschwarze Brünierschicht mit den eingangs beschriebenen Eigenschaften auf.

Als ein letzter Behandlungsschritt erfolgt jetzt noch eine Konservierung der Gleitlagerbauteile, beispielsweise durch Eintauchen in ein Konservierungsbad. Das Konservierungsbad kann insbesondere ein Dewatering Fluid aufweisen.

Mit der Konservierung ist die Behandlung der Gleitlagerbauteile abgeschlossen.

Alternativ zum vorstehend beschriebenen Einbadverfahren kann die Brünierschicht auch mittels eines Zweibadverfahrens hergestellt werden, bei dem die Gleitlagerbauteile zuerst in ein erstes Behandlungsbad und danach in ein zweites Behandlungsbad eingetaucht werden. Dabei weichen Temperierung und Zusammensetzung der Behandlungsbäder jeweils vom Einbadverfahren ab. Insbesondere kann das erste Behandlungsbad etwas stärker in Richtung Primärangriff und das zweite Behandlungsbad etwas stärker in Richtung homogenes Schichtwachstum optimiert werden. Das zweite Behandlungsbad weist vorzugsweise eine um wenigstens 3 K höhere Temperatur auf als das erste Behandlungsbad.

## Patentansprüche

1. Gleitlagerbauteil mit einer Gleitfläche zur Ausbildung eines Gleitkontakts, wobei die Gleitfläche ein Rauheitsprofil aufweist, und im Bereich einer Brünierschicht ausgebildet ist, die sich über die gesamte Tiefe des Rauheitsprofils erstreckt, **dadurch gekennzeichnet, dass** die Gleitfläche bis zur vollständigen Einebnung des Rauheitsprofils durch die Brünierschicht gebildet wird und die Brünierschicht eine Dicke von wenigstens 0,8 µm aufweist.

2. Gleitlagerbauteil nach Anspruch 1, **dadurch gekennzeichnet, dass** die Brünierschicht eine Dicke von maximal 2,0 µm aufweist.

3. Gleitlagerbauteil nach einem der vorhergehenden Ansprüche, **dadurch gekennzeichnet, dass** die Brünierschicht als Hauptbestandteil Eisenoxid der Summenformel Fe₃O₄ aufweist.

4. Gleitlagerbauteil nach einem der vorhergehenden Ansprüche, **dadurch gekennzeichnet, dass** es aus einem niedrig legierten Stahl gefertigt ist.

5. Gleitlagerbauteil nach einem der vorhergehenden Ansprüche, **dadurch gekennzeichnet, dass** es aus einem durchhärtenden Stahl gefertigt ist.

6. Gleitlager mit einem ersten Gleitlagerbauteil, das eine erste Gleitfläche aufweist und einem zweiten Gleitlagerbauteil, das eine zweite Gleitfläche aufweist, wobei das erste Gleitlagerbauteil und das zweite Gleitlagerbauteil relativ zueinander bewegbar sind, die erste Gleitfläche und die zweite Gleitfläche in einem Gleitkontakt zueinander stehen, die erste Gleitfläche wenigstens bereichsweise aus einem Nichteisenwerkstoff besteht und die zweite Gleitfläche ein Rauheitsprofil aufweist und im Bereich einer Brünierschicht ausgebildet ist, und sich die Brünierschicht über die gesamte Tiefe des Rauheitsprofils erstreckt, **dadurch gekennzeichnet, dass** die zweite Gleitfläche bis zur vollständigen Einebnung des Rauheitsprofils durch die Brünierschicht gebildet wird.

7. Gleitlager nach Anspruch 6, **dadurch gekennzeichnet, dass** das erste Gleitlagerbauteil aus einem Nichteisenwerkstoff gefertigt ist oder eine Beschichtung oder einen Gleitbelag aus einem Nichteisenwerkstoff aufweist.

8. Gleitlager nach Anspruch 6 oder 7, **dadurch gekennzeichnet, dass** der Nichteisenwerkstoff ein Metall-Kunststoff-Verbund oder ein Kunststoff-FaserVerbund ist.

9. Gleitlager nach einem der Ansprüche 6 bis 8, **dadurch gekennzeichnet, dass** der Nichteisenwerkstoff Poly-Tetra-Fluor-Ethylen aufweist.

10. Gleitlager nach einem der Ansprüche 6 bis 9, **dadurch gekennzeichnet, dass** das zweite Gleitlagerbauteil gemäß einem der Ansprüche 1 bis 5 ausgebildet ist.

11. Verfahren zur Oberflächenbehandlung von Gleitlagerbauteilen aus Stahl, wobei
- ein Behandlungsbad durch Auflösen eines Salzes angesetzt wird, das einen Oxidationsmittel-Gehalt von wenigstens 15 Gew.% aufweist,
- die Gleitlagerbauteile in das Behandlungsbad eingetaucht und nach einer Behandlungszeit (t) von wenigstens 20 Minuten aus dem Behandlungsbad entnommen werden,
**dadurch gekennzeichnet, dass**
- im Behandlungsbad ein Siedepunkt im Bereich von 142° C bis 145° C eingestellt wird und
- die Gleitlagerbauteile im Behandlungsbad mit einer Geschwindigkeit von wenigstens 20 cm/min bewegt werden.

12. Verfahren nach Anspruch 11, **dadurch gekennzeichnet, dass** das Behandlungsbad mit einem Salz angesetzt wird, das einen Nitritgehalt von 14 Gew.% bis 17 Gew.% aufweist.

13. Verfahren nach einem der Ansprüche 11 oder 12, **dadurch gekennzeichnet, dass** das Behandlungsbad mit einem Salz angesetzt wird, das einen Nitratgehalt von 2 Gew.% bis 4 Gew.% aufweist.

14. Verfahren nach einem der Ansprüche 11 bis 13, **dadurch gekennzeichnet, dass** die Gleitlagerbauteile vor dem Eintauchen in das Behandlungsbad auf eine Anwärmtemperatur (T0) von wenigstens 80° C angewärmt werden.

15. Verfahren nach einem der Ansprüche 11 bis 14, **dadurch gekennzeichnet, dass** die Gleitlagerbauteile nach einer Behandlungszeit (t) von höchstens 60 Minuten aus dem Behandlungsbad entnommen werden.

## Claims

1. Plain bearing component having a sliding surface for forming a sliding contact, wherein the sliding surface has a roughness profile and is formed in the region of a burnishing layer which extends over the entire depth of the roughness profile, **characterized in that** the sliding surface is formed up to complete levelling of the roughness profile by the burnishing layer, and the burnishing layer has a thickness of at least 0.8 µm.

2. Plain bearing component according to Claim 1, **characterized in that** the burnishing layer has a thickness of at most 2.0 µm.

3. Plain bearing component according to either of the preceding claims, **characterized in that** the burnishing layer comprises iron oxide of the chemical formula Fe₃O₄ as the main constituent.

4. Plain bearing component according to one of the preceding claims, **characterized in that** it is produced from a low alloyed steel.

5. Plain bearing component according to one of the preceding claims, **characterized in that** it is produced from a fully hardening steel.

6. Plain bearing with a first plain bearing component having a first sliding surface and a second plain bearing component having a second sliding surface, wherein the first plain bearing component and the second plain bearing component are movable in relation to one another, the first sliding surface and the second sliding surface are in sliding contact with one another, the first sliding surface consists at least in certain regions of a nonferrous material and the second sliding surface has a roughness profile and is formed in the region of a burnishing layer, and the burnishing layer extends over the entire depth of the roughness profile, **characterized in that** the second sliding surface is formed up to complete levelling of the roughness profile by the burnishing layer.

7. Plain bearing according to Claim 6, **characterized in that** the first plain bearing component is produced from a nonferrous material or has a coating or a sliding lining made of a nonferrous material.

8. Plain bearing according to Claim 6 or 7, **characterized in that** the nonferrous material is a metal-plastic composite or a plastic-fibre composite.

9. Plain bearing according to one of Claims 6 to 8, **characterized in that** the nonferrous material comprises polytetrafluoroethylene.

10. Plain bearing according to one of Claims 6 to 9, **characterized in that** the second plain bearing component is formed according to one of Claims 1 to 5.

11. Method for the surface treatment of plain bearing components made of steel, wherein
- a treatment bath is prepared by dissolving a salt which has an oxidant content of at least 15% by weight,
- the plain bearing components are immersed into the treatment bath and, after a treatment time (t) of at least 20 minutes, are removed from the treatment bath,
**characterized in that**
- a boiling point in the range of 142°C to 145°C is set in the treatment bath, and
- the plain bearing components are moved in the treatment bath at a speed of at least 20 cm/min.

12. Method according to Claim 11, **characterized in that** the treatment bath is prepared with a salt which has a nitrite content of 14% by weight to 17% by weight.

13. Method according to either of Claims 11 and 12, **characterized in that** the treatment bath is prepared with a salt which has a nitrate content of 2% by weight to 4% by weight.

14. Method according to one of Claims 11 to 13, **characterized in that** the plain bearing components are heated up to a heat-up temperature (T0) of at least 80°C before they are immersed into the treatment bath.

15. Method according to one of Claims 11 to 14, **characterized in that** the plain bearing components are removed from the treatment bath after a treatment time (t) of at most 60 minutes.

## Revendications

1. Composant de palier lisse avec une face de glissement pour former un contact glissant, dans lequel la face de glissement présente un profil de rugosité et est formée dans la région d'une couche de brunissage, qui s'étend sur toute la profondeur du profil de rugosité, **caractérisé en ce que** la face de glissement est formée jusqu'au nivellement complet du profil de rugosité par la couche de brunissage et la couche de brunissage présente une épaisseur d'au moins 0,8 µm.

2. Composant de palier lisse selon la revendication 1, **caractérisé en ce que** la couche de brunissage présente une épaisseur de 2,0 µm au maximum.

3. Composant de palier lisse selon l'une quelconque des revendications précédentes, **caractérisé en ce que** la couche de brunissage présente comme constituant principal de l'oxyde de fer de la formule brute Fe₃O₄.

4. Composant de palier lisse selon l'une quelconque des revendications précédentes, **caractérisé en ce qu'**il est fabriqué en un acier faiblement allié.

5. Composant de palier lisse selon l'une quelconque des revendications précédentes, **caractérisé en ce qu'**il est fabriqué en un acier trempant à coeur.

6. Palier lisse comportant un premier composant de palier lisse qui présente une première face de glissement, et un deuxième composant de palier lisse qui présente une deuxième face de glissement, dans lequel le premier composant de palier lisse et le deuxième composant de palier lisse sont mobiles l'un par rapport à l'autre, la première face de glissement et la deuxième face de glissement se trouvent en contact glissant l'une avec l'autre, la première face de glissement se compose au moins localement d'un matériau non ferreux et la deuxième face de glissement présente un profil de rugosité et est formée dans la région d'une couche de brunissage, et la couche de brunissage s'étend sur toute la profondeur du profil de rugosité, **caractérisé en ce que** la deuxième face de glissement est formée jusqu'au nivellement complet du profil de rugosité par la couche de brunissage.

7. Palier lisse selon la revendication 6, **caractérisé en ce que** le premier composant de palier lisse est fabriqué en un matériau non ferreux ou présente un revêtement ou un recouvrement de glissement en un matériau non ferreux.

8. Palier lisse selon la revendication 6 ou 7, **caractérisé en ce que** le matériau non ferreux est un composite métal-plastique ou un composite plastique-fibres.

9. Palier lisse selon l'une quelconque des revendications 6 à 8, **caractérisé en ce que** le matériau non ferreux comprend du polytétrafluoroéthylène.

10. Palier lisse selon l'une quelconque des revendications 6 à 9, **caractérisé en ce que** le deuxième composant de palier lisse est formé selon l'une quelconque des revendications 1 à 5.

11. Procédé de traitement de surface de composants de palier lisse en acier, dans lequel
- on prépare un bain de traitement en dissolvant un sel, qui présente une teneur en agent oxydant d'au moins 15 % en poids,
- on plonge les composants de palier lisse dans le bain de traitement et on les retire hors du bain de traitement après un temps de traitement (t) d'au moins 20 minutes,
**caractérisé en ce que**
- on règle dans le bain de traitement un point d'ébullition dans la plage de 142°C à 145°C, et
- on déplace les composants de palier lisse dans le bain de traitement avec une vitesse d'au moins 20 cm/min.

12. Procédé selon la revendication 11, **caractérisé en ce que** l'on prépare le bain de traitement avec un sel, qui présente une teneur en nitrite de 14 % en poids à 17 % en poids.

13. Procédé selon l'une des revendications 11 ou 12, **caractérisé en ce que** l'on prépare le bain de traitement avec un sel, qui présente une teneur en nitrate de 2 % en poids à 4 % en poids.

14. Procédé selon l'une quelconque des revendications 11 à 13, **caractérisé en ce que** l'on préchauffe les composants de palier lisse à une température de préchauffage (T0) d'au moins 80°C avant de les plonger dans le bain de traitement.

15. Procédé selon l'une quelconque des revendications 11 à 14, **caractérisé en ce que** l'on retire les composants de palier lisse hors du bain de traitement après une durée de traitement (t) de 60 minutes au maximum.
